# EUROPEAN PATENT SPECIFICATION

(11) **EP 1 000 826 B1**
(45) Date of publication and mention of the grant of the patent: **30.09.2009**
(21) Application number: 99122416.3
(22) Date of filing: 10.11.1999
(51) Int. Cl.: B60R 25/00, G07C 9/00

(54) **Remote control system for a motor vehicle**
Kraftfahrzeug-Fernsteuerungssystem
Dispositif de télécommande pour un véhicule automobile

(30) Priority: 10.11.1998 US 189265
(43) Date of publication of application: 17.05.2000
(73) Proprietor: Delphi Technologies, Inc., Troy, MI 48098 (US)
(72) Inventor: Simon, Marc Raymond, Whitefish Bay, Wisconsin 53211-1125 (US)
(74) Representative: Denton, Michael John

(56) References cited:
- EP-A- 0 282 339
- EP-A- 0 870 889
- DE-C- 19 603 747
- DE-C- 19 643 020
- US-A- 5 113 427
- US-A- 5 223 844

## Description

### Background Of The Invention

The present invention relates to remote system for controlling access to motor vehicles, and more particularly to wireless remote control systems that can be used to unlock vehicle doors and operate other functions on the vehicle.

Automobiles have used keys which mechanically operate locks to limit access to the vehicle and to starting the engine to only authorized persons. More recently remote keyless entry (RKE) systems have been provided that use a small radio frequency (RF) transmitter, often having the shape of a key ring fob, to access the vehicle. This RF transmitter has a number of push button switches allowing the driver to control different functions of the vehicle, such as lock and unlock the doors, arm a security system or open the trunk. These transmitters also have been proposed to control starting of the vehicle engine. When a given push button switch is operated, the transmitter sends an RF signal which carries a digital numerical code and a designation of the function to be performed. A receiver in the vehicle receives the transmitter signal, verifies that the numerical code designates an authorized transmitter for that particular vehicle and if so, signals the vehicle control circuits to perform the prescribed function.

Although the digital numerical code makes it extremely difficult for unauthorized persons to gain access to the motor vehicle, concern has been expressed that someone with a radio receiver and a digital signal analyzer could eavesdrop on the radio transmissions and obtain the security numbers. Thus a thief could "stake out" a valuable vehicle to await the return of the driver and learn the transmission necessary to operate the vehicle. Those security numbers then could be utilized to steal that vehicle at a later point in time. Therefore, as the technology available to thieves advances, so too must the signal processing employed by the RKE system.

When the mechanical key or transmitter is lost or locked inside the vehicle, the driver is prevented from entering the vehicle and starting the engine. This may occur at a time or place where emergency service is not readily available. With an increased need for security, vehicle manufacturers have made is more difficult to gain entry without a proper access device, a mechanical key or RKE transmitter. While this heightened vehicle security deters theft, it also prevents the owner or a service technician from gaining entry without such devices.

Therefore, there exists a need for an alternative mechanism to allow authorized access to and control of the vehicle in circumstances in which the owner does not possess an access device. The obvious alterative mechanism would be to produce a universal remote keyless entry transmitter which sends a master access code which will activate all vehicles or at least those vehicles of a specific manufacturer. However, even if distribution of such universal access devices is restricted to authorized service technicians, the devices would be susceptible to theft or counterfeiting for use by vehicle thieves.

Further attention is drawn to the document US 5 113 427, which relates to a radio-signal-responsive vehicle device control system including a receiver unit for receiving a radio signal generated based on a signal transmitted from a calling telephone unit and for generating a detectable signal based on the received radio signal, receiver unit storage structure mounted in a motor vehicle for storing the receiver unit, a detector for producing a detected signal in response to detection of the detectable signal from the receiver unit, a control unit responsive to the detected signal from the detector for producing a control signal based on at least the detectable signal, and an actuator for controlling at least one device in the motor vehicle based on the control signal from the control unit. The vehicle device control system allows the vehicle device to be remotely controlled through a simple and low-cost arrangement, making it possible for a vehicle radio telephone unit with no reception capability to receive and transmit a signal.

Further more attention is drawn to the document EP 0 870 889, which relates to a keyless control system, which may be employed to gain entry to a motor vehicle and start an engine. When using this system, a user activates a remote control by selecting a function for the motor vehicle to perform. In response, a challenge number is exchanged and used in an encryption algorithm by both the remote control and a control circuit in the motor vehicle to produce independently of each other separate algorithm answers. A first verification indication is produced when the control circuit finds both answers to be the same. The remote control also sends its unique remote control identification and a designation of the selected function to the control circuit. If the received remote control identification matches is on an authorized remote control list stored in the control circuit, a second verification indication is produced. When both the first and second verification indications are produced, the control circuit issues a signal that causes the motor vehicle to perform the selected function.

### Summary Of The Invention

A general object of the present invention is to provide a backup system for enabling access to a vehicle in the event that standard access device are unavailable.

Another object is to enable virtual access by which the vehicle can be serviced from a remote location.

A further object of the present invention is to provide such as backup access system which is relatively secure from misappropriation by thieves.

Yet another object is to enable the backup access system to be controlled from a site that is remote from the vehicle so that a service technician does not have to go to the vehicle being accessed.

A still further object of the present invention is to provide a backup access system that is controlled from a central location which can be utilized by authorized personnel and which is safeguarded from misappropriation.

Another object is preferably to provide such remote access utilizing common carrier communication systems.

A further object is preferably to provide such remote access utilizing common carrier communication systems.

In accordance with the present invention, a method for controlling access to a vehicle from a remote location, as set forth in claim 1, is provided. Embodiments of the present invention are claimed in the dependent claims.

A control system has a control circuit installed in the vehicle to produce output signals that operate devices on the vehicle. The control circuit includes a first radio frequency (RF) transceiver. A second RF transceiver is connected to a common carrier telephone system to communicate with the first RF transceiver via a radio frequency communication link, which employs a digital cordless telephone protocol.

To access the vehicle a encoded command is send over the common carrier telephone system from a remote location to the second RF transceiver. That command is relayed from the second RF transceiver to the first RF transceiver. The control circuit responds by activating a component of the motor vehicle to perform a function indicated by the command.

In the preferred embodiments of the present control system, the second RF transceiver can comprise a cordless telephone or can be incorporated into a cellular or a satellite telephone system.

### Brief Description Of The Drawings

FIGURE 1 is a pictorial diagram of a system according to the present invention for remote control of functions on a motor vehicle;
FIGURE 3 is a block schematic diagram of a driver's remote motor vehicle control system; and

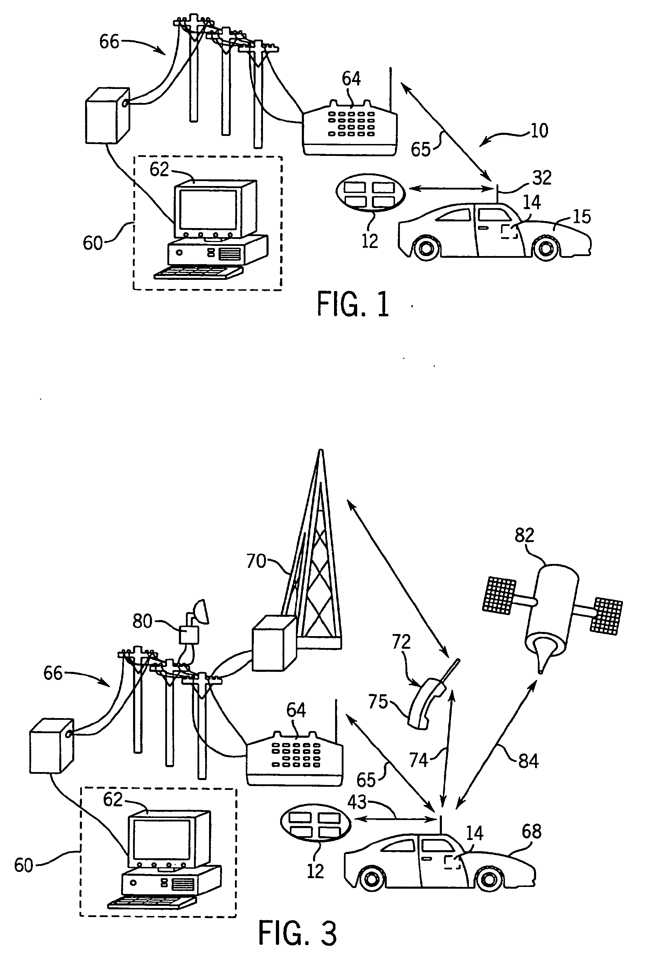

FIGURE 3 is a schematic diagram of a enhanced embodiment of a remote motor vehicle control system.

### Detailed Description Of The Invention

With initial reference to Figure 1, a keyless motor vehicle control system 10 comprises a driver's remote control 12, which preferably has the form of a key ring fob carried by a driver, and a control circuit 14 located in the motor vehicle 15.

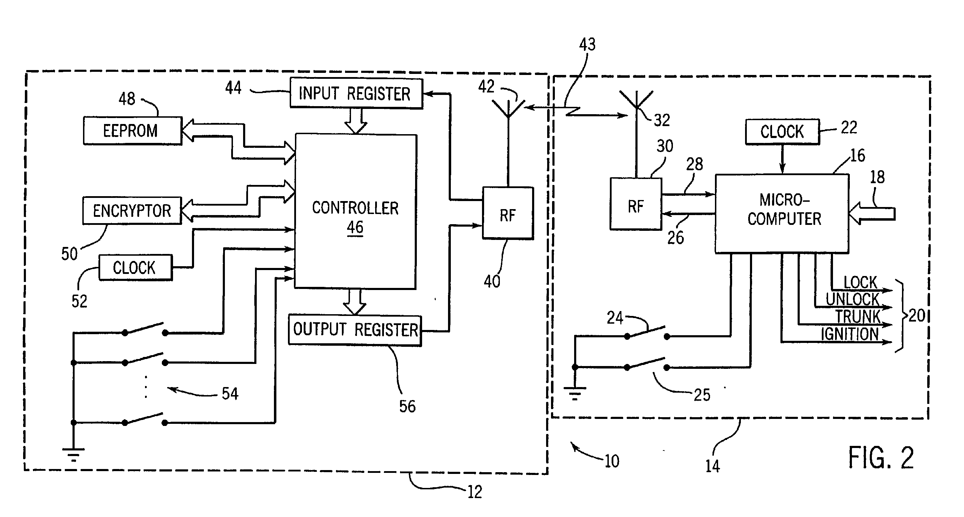

As shown in detail in Figure 2, the control circuit 14 in the vehicle includes a microcomputer 16 with an internal microprocessor and memory in which the control program and data are stored. A conventional clock circuit 22 supplies timing pulses to the microcomputer 16. The service technician is able to place the microcomputer 16 into different functional modes by operating a plurality of manual input switches 24 and 25, as will be described.

The control circuit 14 operates several functions on the motor vehicle, such as locking and unlocking the doors, unlatching the trunk lid and starting the engine, for example. For that functionality, the microcomputer 16 is interfaced to the corresponding actuating devices on the motor vehicle. In some cases, the various functions are controlled by an another computer in the motor vehicle to which the microcomputer 16 sends operating commands via a parallel communication bus 18. In other motor vehicles, the microcomputer 16 has individual output lines 20 connected directly to the control devices for the respective functions being operated. Specifically, separate wires may be coupled to actuators which lock and unlock the doors, unlatch the trunk lid and start the engine.

A serial output line 26 and a serial input line 28 of the microcomputer 16 are connected to a first radio frequency transceiver 30 which utilizes a digital cordless telephone protocol, such as the Digital Enhanced Cordless Telecommunications (DECT) standard. This protocol was developed in the mid-1980's as a pan-European standard for cordless telephones and has been adopted to use outside the European Union. The DECT standard protocol has been used for simultaneous bidirectional communication between a base station and a hand held receiver unit of cordless telephones. The term 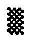 cordless telephone 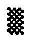 as used in the industry, means a telephone comprising a base station and a hand held receiver unit. The owner of the cordless telephone utilizes a wire cord to connect the base station to a terrestrial telephone line serving the owner's premises. The owner's a hand held receiver unit communicates with the single base station by radio frequency signals.

In a general sense the first radio frequency transceiver 30 modulates a standard RF frequency carrier with the serial digital data received on line 26 and transmits that modulated radio frequency signal via an antenna 32. The first transceiver 30 also receives and demodulates signals on a second radio frequency that are received by the antenna 32 to recover serial digital data. That data is sent via line 28 to the microcomputer 16.

The first transceiver 30 of the control circuit 14 is designed to communicate with a second radio frequency transceiver 40 and antenna 42 both located within the remote control 12 that may be carried by a driver of the vehicle 15. The second transceiver 40 has a receiver section which demodulates the received radio frequency signal to recover digital data carried by that signal and the recovered data is sent in a serial format to an input register 44. The input register 44 converts the serial data stream from the second transceiver 40 into a parallel format which is read by a controller 46. The controller 46 may be either a hardwired device for sequentially performing the remote control operations to be described, or a programmable device which executes a software program to perform those operations. Controllers of this general type are well-known in different types of transponders and their conventional technology can be utilized to implement the functions of the present controller 46. The controller 46 of the remote control 12 is connected to an electrically erasable programmable read only memory (EEPROM) 48 which stores data to be transmitted to the motor vehicle control circuit 14 when the remote control is interrogated.

A clock circuit 52 also provides timing signals for the remote control 12. A plurality of user operable switches 54 are connected to different input lines to the controller 46 in order for the driver to select the specific functions to be performed on the motor vehicle. For example, a separate switch can be provided for the functions of unlocking and locking the doors, unlatching the trunk lid, and starting the engine.

The remote control 12 also includes an encryptor 50 connected to the controller 46 to encrypt a remote control security number for transmission to the control circuit 14. The encryptor 50 utilizes a secret-key cryptography algorithm to encrypt data for sending to the control circuit. For example, the algorithm specifies a sequence of a plurality of logical operations which are performed on a known seed number and a challenge number received from the control circuit to produce a resultant number for transmission by the remote control. Several cryptography algorithms of this type are described by Mehrdad Foroozesh in an article entitled "Protecting Your Data With Cryptography," UNIX Review, November 1996, volume 14, number 12, page 55(6), which description is incorporated herein by reference. Such encryption techniques and algorithms are commonly used to encrypt computer data being transmitted over common carriers. It should be understood that other encryption techniques may be used.

Digital output data is sent by the controller 46 in parallel form to a parallel-in/serial-out output register 56. The serial data from the output register 56 is applied to the input of a transmitter section in the second transceiver 40 which modulates a radio frequency signal which that data. The resultant RF signal is sent via the antenna 42 to the control circuit 14 in motor vehicle. The components of the remote control preferably are powered by a battery (not shown), but as an alternative, power could be derived from received RF signal energy as was done in some prior remote controls.

When the driver desires the vehicle perform a given function the corresponding switch 54 is pressed. This sends a signal to the controller 46 which responds by obtaining an initial numerical code from storage in the EEPROM 48. The initial numerical code preferably is a unique identification number assigned to that remote control and stored in the EEPROM 48. The initial numerical code is sent via output register 56 to the second transceiver 40 from which it is transmitted to the control circuit 14 in the adjacent motor vehicle.

Receipt of the initial numerical code causes the motor vehicle control circuit 14, which had been in a "sleep state," to wake-up and its microcomputer 16 begins executing a software routine for interrogating the remote control 12. This initiates an exchange of messages according to a rolling security code encryption algorithm which enables the control circuit 14 to verify the authenticity of this particular remote control 12. The first step of this authentication process determines whether the initial numerical code matches one stored in the memory of the microcomputer 16 which list those codes of authorized remote controls. If the initial numerical code is recognized, the microcomputer responds by sending a randomly generates challenge number to the remote control 12. Upon receipt the challenge number is processed by the remote control's encryptor 50 which produces a resultant number that is transmitted back to the control circuit 14. At the same time, control circuit 14 uses the same encryption algorithm to produce its own resultant number. Microcomputer 16 in the control circuit 14 compares the two resultant numbers which should match. If the numbers match the remote control is determined to be that is authentic, that is authorized to operate the particular vehicle 15. It should be noted that other types of authentication procedures may be used with the present remote access control system.

When a remote control 12 has been authenticated, the microcomputer 16 checks an input to determine whether a remote control DELETE MODE switch 24 is closed. If that is not the case, the execution branches to checks another input to determine whether a remote control ADD MODE switch 25 is closed. The function of these switches 24 and 25 will be described subsequently. These switches are used to program the microcomputer with the identification numbers of the authenticate remote controls 12.

When neither mode selection switch 24 or 25 is found to be closed, the microcomputer 16 uses the switch indication number received from the remote control 12 to determine the indicated function to be performed by the motor vehicle. For example when the door unlock function is indicated, an unlock command signal is sent out over either communication bus 18 to the main computer for the motor vehicle, or over one of the dedicated output lines 20 to the lock control circuit of the motor vehicle. Alternatively these command signal may unlatch the trunk of the vehicle or start the engine.

There are occasions when the vehicle driver misplaces the remote control device 12 or locks it in the vehicle, and also not have a mechanical key available. In these situations the driver is prevented from entering the vehicle, as well as starting the engine. When this occurs, the driver seeks assistance by contacting an office of the manufacturer of the motor vehicle 15. The driver must identify himself or herself and the particular vehicle 15 to be accessed and provide proper identification. Personnel at the motor vehicle manufacturer's office 60 utilize records stored in a personal computer 62 to verify that the caller is authorized to use that specific vehicle 15.

Once that authority of the caller is verified, the an internal modem in the personal computer 62 dials a cordless telephone base station 64 that is in the vicinity of the motor vehicle 15. A common carrier telephone network 66 establishes the connection between the personal computer 62 and the cordless telephone base station 64. The cordless telephone base station established an RF communication link, using the DECT standard protocol, between its antenna and the motor vehicle remote control 12. The personal computer 62 and the cordless telephone base station 64 act as another remote control device similar to device 12. Specifically the cordless telephone base station 64 serves as the second radio transceiver 40 in Figure 2, whereas the personal computer 62 functions as the remaining components of the remote control. Specifically, the personal computer 62 contains a listing of the remote control identification codes that the control circuit 14 in the motor vehicle 15 will recognize as being authorized to activate its vehicle's functions. In an alternative case, the personal computer 62 may store a master identification code that is recognized by all of the vehicles produced by that manufacturer or all of the same make and model of vehicle as vehicle 15 for which service needs to be provided.

Once the appropriate identification code has been retrieved from the storage within the personal computer 62, it is sent via the telephone network 66 to the cordless telephone base station 64 from which the code is transmitted to the vehicle 15 over DECT communication link 65. Upon receipt of this initial numerical code, the motor vehicle control circuit 14 wakes up and responds as previously described with respect to communication with the FOB type remote control device 12. In summary, the personal computer 62 receives the challenge number from the vehicle via the cordless telephone base station 64 and telephone network 66 and utilizes the encryption algorithm to compute the resultant number that is sent back to the motor vehicle 15 along with the appropriate function code to be performed on the vehicle. Specifically the personnel at the manufacturer's office 60 can instruct the control circuitry within vehicle 15 to unlock the doors and start the engine in much the same way as though the same type of commands were coming from the FOB type remote control device 12. Thus a stranded motorist who is without any mechanism to access the vehicle can be given access and the ability to start the vehicle without such access devices. A provision must be made to allow the user to turn off the engine of the car after completing the trip to a place where they can obtain a key or a remote control device 12.

The personnel at the manufacturer's office are also able to program other features of the motor vehicle via the computer telephone link. For example in the case of a computer malfunction within the vehicle 15 the manufacturer's personnel at the remote office 60 are able to download program upgrades and reconfigure the computer system. In doing so the appropriate commands and software are sent from the personal computer 62 through the telephone communication network 66 and cordless telephone base station 64 to the control circuit 14 within the vehicle 15. The microcomputer 16 upon receipt of this information sends the appropriate commands and data over the internal vehicle computer network 14 to the appropriate computer within the vehicle 15. In this manner personnel at a central office of the motor vehicle manufacturer, such as one office for an entire country, can communicate with the vehicles located throughout the country.

One of the drawbacks of utilizing cordless telephone base station's 64 to communicate with the vehicle is the relatively short range of the DECT communication link 65. This requires that the vehicle 15 be within relatively close proximity (e.g. within 300 meters) to the cordless telephone base station 64 which typically would be located at a dealership for that make of vehicle. As a consequence, this type of remote access might require that the stranded vehicle 15 be towed to a dealership, in order for the remotely located personal computer to communication with the vehicle. Nevertheless, the system shown in Figure 1 has significant use in restricting access to vehicles as individual dealers and their service technicians do not have access to the master vehicle identification codes or the remote control identification codes which may operate specific vehicles. That information is stored only in the personal computer 62 at the vehicle manufacturer's central office 60.

Alternative communication carriers may be utilized to connect the vehicle manufacturer's central office 60 to motor vehicles throughout the country. With reference to Figure 3, in addition to the personal computer 62 in the central office of the vehicle manufacturer accessing the cordless telephone base station 64, the telephone network 64 also is connected to a cellular telephone system 70 and a satellite telephone system 80. This enables the user of the personal computer 62 at the manufacturer's office to determine which common carrier and which type of communication link to employ in accessing the motor vehicle 68.

For example, the operator of personal computer 62 may utilize the modem within the computer to dial the number of a cellular telephone 72 owned by the motor vehicle driver. That cellular telephone 72 may be carried on the driver's person or built into the motor vehicle 68. Communication with cellular telephone 72 is accomplished in the same manner as any other telephone call with the exception that once the call is established, the personal computer 62 transmits a code which identifies the nature of the call as being a control call for the motor vehicle 68. The cellular telephone 72 is unlike standard cellular telephones in that it also has a transceiver for the DECT standard protocol to communicate with the first radio frequency transceiver 30 within the motor vehicle 68. Upon receiving the command that designates this type of call, the cellular telephone activates the DECT radio frequency transceiver 75 to establish a DECT communication link 74 with the motor vehicle 68. In the alternative situation where the cellular telephone 72 is incorporated into the motor vehicle, the DECT radio frequency transceiver 75 may be eliminated and the cellular telephone merely possesses the necessary circuitry to communicate via the DECT standard protocol over a hardwired connection to the control circuit 14 within the vehicle.

Once the DECT communication link 74 has been established between the cellular telephone 72 and the motor vehicle 68 an acknowledgment of that establishment is sent back to the personal computer 62. In response the personal computer 62 sends the initial numerical code to the motor vehicle which initiates the communication exchange as previously described. Thus in the same manner as the remote operator at the motor vehicle manufacturer's office 60 was able to communicate with vehicle 15 by the cordless telephone base station 64 in Figure 2 the operator of personal computer 62 is able to communicate with the vehicle 68 via the cellular telephone system 70 and telephone 72. This latter approach enables the central office 60 to communicate with a motor vehicle in almost all populated areas of a developed country. This eliminates the requirement that the motor vehicle be located in relatively close proximity to a cordless telephone base station 64.

Even in highly developed countries there are areas which are relatively remote, unpopulated and not serviced by cellular telephone networks. In these instances if a car is located outside of the range of cellular telephone system 70, the personnel in the vehicle manufacturer's office 60 can dial an access number for a satellite communication network 80 to utilize a satellite 82 to establish a DECT communication link 84 with a satellite telephone receiver within the motor vehicle 68. Thus a truly full duplex, bi-directional DECT communication link 84 is established between the vehicle and the personal computer 62 at the manufacturer's office 60. In the same manner as that previously described with respect to the cordless telephone base station 64 and the cellular telephone communication system 70, personnel at the office 60 are able to selectively control functions on motor vehicle 68, such as unlocking the doors and starting the engine, as well as reprogramming or reconfiguring computers within the vehicle.

Regardless of the particular communication channel which is utilized to establish a link between the personal computer 62 and a motor vehicle, the present invention provides a very robust and secure method in which the driver or authorized service personnel can access the motor vehicle without possessing a mechanical key or a remote control 12. This type of remote access control can be utilized regardless of the location of the vehicle relative to the central office 60 of the motor vehicle manufacturer. Furthermore, by utilizing the central office 60 to control access to the vehicle, it is unlikely that thieves and unauthorized personnel will be able to accomplish such remote control without possessing a mechanical key or the remote control device 12.

The present remote access technique also can be employed to disable a lost or stolen remote control 12 from being able to access the vehicle 15. In this event, the owner of the vehicle 68 contacts the motor vehicle manufacturer's office 60 and requests deactivation of the specific remote control 12. The personnel at the office query the records to obtain the unique identification number assigned to the missing remote control. A command then is transmitted to the control circuit 14 of the motor vehicle 68 via the telephone network 66 and one of the cordless telephone 64, cellular telephone system 70 or a satellite telephone system 80. The command designates that the remote control 12 with that identification number shall not have access to the vehicle.

Control circuit 14 responds not only by removing the identification number from its list of authorized remote controls, the designated remote control 12 is disabled upon any attempt to gain access to the vehicle. Specifically, the next time that the vehicle's control circuit 14 receives a signal from a remote control with that identification number, the control circuit 14 responds by transmitting a disable command back to the control circuit 14. The remote control responds by disabling its operation, for example by erasing the seed number which the encryptor 50 utilizes in the cryptography algorithm. Thus the finder or thief of the missing remote control can not gain access to the vehicle,

The cellular telephone 72 may be located in a police car and used to disable the vehicle during a pursuit. For example, if the police are pursuing the vehicle which will not stop, the police officer radios the police station with the license plate number of the vehicle. The dispatcher obtains the manufacturer's vehicle identification number for that vehicle from the government motor vehicle registration records and transmits that number to the police officer.

The police officer utilizes a cellular telephone 72 in the police car to contact the motor vehicle manufacturer's office 60. The officer provides proper authorization code to office personnel along with the vehicle identification number. The personnel employ the personal computer 62 to communicate with vehicle 68 via the police car's cellular telephone 72. Once communication has been established, the personal computer 62 transmits a vehicle disable command to the police car's cellular telephone which relays that disable command to the vehicle 68 being pursued. When the control circuit 14 in that vehicle receives the disable command, a signal is sent to the engine control system which causes the vehicle engine to decelerate gradually to a stop. Thereafter, the engine will not operate until reactivated by another command from the motor vehicle manufacturer's office 60.

## Claims

1. A method for controlling access to a vehicle (15) from a remote location, said method comprising the steps of:
installing a control circuit (14) having a first digital cordless telephone protocol transceiver (30) within the vehicle, wherein output signals from the control circuit are connected to operate devices on the vehicle;
connecting a common carrier telephone system (66) to a second digital cordless telephone protocol transceiver (40) located within a remote control for communication with the first digital cordless telephone protocol transceiver (30);
transmitting a command over the common carrier telephone system (66) from the remote location to the second digital cordless telephone protocol transceiver (40);
relaying the command from the second digital cordless telephone protocol transceiver (40) to the first digital cordless telephone protocol transceiver (30) via a radio frequency signal (43) which conforms with a digital cordless telephone protocol; and
in response to receiving the command, the control circuit (14) activating a component (20) of the motor vehicle (15) to perform a function indicated by the command.

2. The method as recited in claim 1 wherein the step of connecting comprises connecting a base station (64) of a cordless telephone to the common carrier telephone system (66).

3. The method recited in claim 1 wherein the second digital cordless telephone protocol transceiver (40) is connected to the common carrier telephone system by a cellular telephone (72).

4. The method as recited in claim 1 wherein the step of connecting couples the second digital cordless telephone protocol transceiver (40) to a satellite telephone system (82).

5. The method as recited in claim 1 wherein the control circuit (14) activating a component (20) of the motor vehicle (15) causes the component to perform a function that is selected from a group consisting of unlocking a door, locking a door, unlatching a trunk lid, starting an engine, and sending digital signals to a computer in the vehicle.

6. The method as recited in claim 1 further comprising providing a remote keyless entry transmitter (12) which is operable by a driver of the vehicle (15) to send a command to the first digital cordless telephone protocol transceiver (30).

7. The method as recited in claim 1 wherein the step of the control circuit (14) activating a component (20) of the motor vehicle comprises disabling the motor vehicle from being driven.

8. The method as recited in claim 1 further comprising, in response to receiving the command, the control circuit (14) transmitting a command which disables the remote control.

9. The method of any of the claims 1 to 5 comprising the steps of:
connecting a common carrier telephone system (66) to a second radio frequency transceiver (40) located within a remote control for communicating with the first radio frequency transceiver via a radio frequency communication link (43) which employs a digital cordless telephone protocol;
transmitting an initial signal from the second radio frequency transceiver (40) to the first radio frequency transceiver (30) using the digital cordless telephone protocol;
transmitting a challenge number from the first radio frequency transceiver (30) to the second radio frequency transceiver (40) using the digital cordless telephone protocol;
computing a resultant number from the challenge number according to an encryption process;
transmitting the resultant number from the second radio frequency transceiver (40) to the first radio frequency transceiver (30) using the digital cordless telephone protocol;
authenticating whether the resultant number received by the first radio frequency transceiver (30) is valid; and
in response to receiving a valid resultant number and the command, the control circuit (14) activating a component of the motor vehicle to perform a function indicated by the command.

## Patentansprüche

1. Verfahren zum Steuern eines Zugangs zu einem Fahrzeug (15) von einem entfernten Ort, wobei das Verfahren die Schritte aufweist:
Installieren einer Steuerschaltung (14) mit einem ersten digitalen drahtlosen Telefonprotokoll-Transceiver (30) in dem Fahrzeug, wobei Ausgabesignale von der Steuerschaltung verbunden werden, um Vorrichtungen in dem Fahrzeug zu betreiben;
Verbinden eines Telefonsystems (66) mit gemeinsamem Träger mit einem zweiten digitalen drahtlosen Telefonprotokoll-Transceiver (40), der sich in einer entfernten Steuerung bzw. Fernsteuerung befindet, zur Kommunikation mit dem ersten digitalen drahtlosen Telefonprotokoll-Transceiver (30);
Übertragen eines Befehls über das Telefonsystem (66) gemeinsamem Träger von dem entfernten Ort an den zweiten digitalen drahtlosen Telefonprotokoll-Transceiver (40);
Weiterleiten des Befehls von dem zweiten digitalen drahtlosen Telefonprotokoll-Transceiver (40) an den ersten digitalen drahtlosen Telefonprotokoll-Transceiver (30) über ein Funkfrequenzsignal (43), das mit einem digitalen drahtlosen Telefonprotokoll konform ist; und
als Reaktion auf den Empfang des Befehls, Aktivieren, durch die Steuerschaltung (14), einer Komponente (20) des Kraftfahrzeugs (15), um eine Funktion durchzuführen, die durch den Befehl angezeigt wird.

2. Verfahren gemäß Anspruch 1, wobei der Schritt des Verbindens aufweist ein Verbinden einer Basisstation (64) eines drahtlosen Telefons mit dem Telefonsystem (66) mit gemeinsamem Träger.

3. Verfahren gemäß Anspruch 1, wobei der zweite digitale drahtlose Telefonprotokoll-Transceiver (40) mit dem Telefonsystem (66) mit gemeinsamem Träger durch ein zellulares Telefon (72) verbunden ist.

4. Verfahren gemäß Anspruch 1, wobei der Schritt des Verbindens den zweiten digitalen drahtlosen Telefonprotokoll-Transceiver (40) mit einem Satellitentelefonsystem (82) verbindet.

5. Verfahren gemäß Anspruch 1, wobei ein Aktivieren einer Komponente (20) des Kraftfahrzeugs (15) durch die Steuerschaltung (14) die Komponente veranlasst, eine Funktion durchzuführen, die aus einer Gruppe ausgewählt wird, die besteht aus Entsperren einer Tür, Versperren einer Tür, Entriegeln eines Kofferraums, Starten eines Motors und Senden von digitalen Signalen an einen Computer in dem Fahrzeug.

6. Verfahren gemäß Anspruch 1, das weiter aufweist Vorsehen eines schlüssellosen Fernöffnungs-Senders (12), der durch einen Fahrer des Fahrzeugs (15) bedienbar ist, um einen Befehl an den ersten digitalen drahtlosen Telefonprotokoll-Transceiver (30) zu senden.

7. Verfahren gemäß Anspruch 1, wobei der Schritt des Aktivierens einer Komponente (20) des Kraftfahrzeugs durch die Steuerschaltung (14) ein Deaktivieren des Fahrens des Kraftfahrzeugs aufweist.

8. Verfahren gemäß Anspruch 1, das weiter aufweist, als Reaktion auf einen Empfang des Befehls, ein Senden eines Befehls durch die Steuerschaltung (14), der die Fernsteuerung deaktiviert.

9. Verfahren gemäß einem der Ansprüche 1 bis 5, das die Schritte aufweist:
Verbinden eines Telefonsystems (66) mit gemeinsamem Träger mit einem zweiten digitalen drahtlosen Telefonprotokoll-Transceiver (40), der sich in einer Fernsteuerung befindet, zur Kommunikation mit dem ersten Funkfrequenztransceiver über eine Funkfrequenzkommunikationsverbindung (43), die ein digitales drahtloses Telefonprotokoll einsetzt;
Übertragen eines anfänglichen Signals von dem zweiten Funkfrequenztransceiver (40) an den ersten Funkfrequenztransceiver (30) unter Verwendung des digitalen drahtlosen Telefonprotokolls;
Übertragen einer Authentisierungsnummer von dem ersten Funkfrequenztransceiver (30) an den zweiten Funkfrequenztransceiver (40) unter Verwendung des digitalen drahtlosen Telefonprotokolls;
Berechnen einer resultierenden Nummer aus der Authentisierungsnummer gemäß einem Verschlüsselungsprozess;
Übertragen der resultierenden Nummer von dem zweiten Funkfrequenztransceiver (40) an den ersten Funkfrequenztransceiver (30) unter Verwendung des digitalen drahtlosen Telefonprotokolls;
Authentisieren, ob die resultierende Nummer, die durch den ersten Funkfrequenztransceiver (30) empfangen wird, gültig ist; und
als Reaktion auf einen Empfang einer gültigen resultierenden Nummer und des Befehls, Aktivieren einer Komponente des Kraftfahrzeugs durch die Steuerschaltung (14), um eine Funktion durchzuführen, die durch den Befehl angezeigt wird.

## Revendications

1. Procédé pour contrôler l'accès à un véhicule (15) depuis un emplacement à distance, ledit procédé comprenant les étapes consistant à :
installer dans le véhicule un circuit de commande (14) ayant un premier émetteur-récepteur numérique (30) à protocole téléphonique sans fil à l'intérieur du véhicule, de sorte que des signaux de sortie provenant du circuit de commande sont connectés pour actionner des dispositifs sur le véhicule ;
connecter un système téléphonique porteur commun (66) à un second émetteur-récepteur numérique à protocole téléphonique sans fil (40), situé à l'intérieur d'une commande à distance, pour une communication avec le premier émetteur-récepteur (30) numérique à protocole téléphonique sans fil (30) ;
émettre un ordre via le système téléphonique porteur commun (66) depuis l'emplacement à distance vers le second émetteur-récepteur (40) numérique à protocole téléphonique sans fil ;
relayer l'ordre provenant du second émetteur-récepteur (40) numérique à protocole téléphonique sans fil vers le premier émetteur-récepteur (30) numérique à protocole téléphonique sans fil via un signal à fréquence radio (43) qui se conforme à un protocole téléphonique numérique sans fil ; et
en réponse à la réception de l'ordre, le circuit de commande (14) active un composant (20) du véhicule automobile (15) pour exécuter une fonction indiquée par l'ordre.

2. Procédé selon la revendication 1, dans lequel l'étape de connexion comprend de connecter une station de base (64) d'un téléphone sans fil au système téléphonique porteur commun (66).

3. Procédé selon la revendication 1, dans lequel le second émetteur-récepteur (40) numérique à protocole téléphonique sans fil est connecté au système téléphonique porteur commun par un téléphone cellulaire (72).

4. Procédé selon la revendication 1, dans lesquels lequel l'étape de connexion couple le second émetteur-récepteur (40) numérique à protocole téléphonique sans fil avec un système téléphonique par satellite (82).

5. Procédé selon la revendication 1, dans lequel le circuit de commande (14) qui active un composant (20) du véhicule automobile (15) amène le composant à exécuter une fonction qui est choisie parmi un groupe comprenant le déverrouillage d'une porte, le verrouillage d'une porte, le déverrouillage d'un couvercle de coffre, le démarrage d'un moteur, et l'envoi de signaux numériques à un ordinateur dans le véhicule.

6. Procédé selon la revendication 1, comprenant en outre l'étape selon laquelle un émetteur de saisie automatique à distance (12) qui est utilisable par un conducteur du véhicule (15) est prévu pour envoyer une commande au premier émetteur-récepteur numérique (30) à protocole téléphonique sans fil.

7. Procédé selon la revendication 1, dans lequel l'étape dans laquelle le circuit de commande (14) active un composant (20) du véhicule automobile comprend d'inactiver la conduite du véhicule automobile.

8. Procédé selon la revendication 1, comprenant en outre, en réponse à la réception de l'ordre, l'étape selon laquelle le circuit de commande (14) émet un ordre qui inactive la commande à distance.

9. Procédé selon l'une quelconque des revendications 1 à 5, comprenant les étapes suivantes :
connecter un système téléphonique porteur commun (66) à un second émetteur-récepteur (40) à fréquence radio, situé à l'intérieur d'une commande à distance, pour communiquer avec le premier émetteur-récepteur à fréquence radio via une liaison de communication à fréquence radio (43) qui emploie un protocole téléphonique sans fil numérique ;
émettre un signal initial depuis le second émetteur-récepteur à fréquence radio (40) vers le premier émetteur-récepteur à fréquence radio (30) en utilisant le protocole téléphonique sans fil numérique ;
émettre un nombre d'interrogation depuis le premier émetteur-récepteur à fréquence radio (30) vers le second émetteur-récepteur à fréquence radio (40) en utilisant le protocole téléphonique sans fil numérique ;
calculer un nombre résultant à partir du nombre d'interrogation selon un processus de cryptage ;
émettre le nombre résultant depuis le second émetteur-récepteur à fréquence radio (40) vers le premier émetteur-récepteur à fréquence radio (30) en utilisant le protocole téléphonique sans fil numérique ;
authentifier si le nombre résultant reçu par le premier émetteur-récepteur à fréquence radio (30) est valide ; et
en réponse à la réception d'un nombre résultant valide et de l'ordre, le circuit de commande (14) active un composant du véhicule automobile pour exécuter une fonction indiquée par l'ordre.
